# EUROPÄISCHE PATENTSCHRIFT

(11) **EP 1 388 582 B1**
(45) Veröffentlichungstag und Bekanntmachung des Hinweises auf die Patenterteilung: **30.04.2008**
(21) Anmeldenummer: 03011964.8
(22) Anmeldetag: 28.05.2003
(51) Int. Cl.: C09J 7/02, B32B 25/08, B32B 7/12

(54) **Selbstklebende Oberflächenschutzfolie, insbesondere zur Abdeckung von lackierten Blechen und Hochglanzblechen aus Aluminium oder Edelstahl**
Self adhesive surface protection film, especially for covering of painted sheets and aluminium or stainless steel high gloss varnished sheets
Film protecteur de surface auto-adhérent, en particulier pour la protection de tôles peintes et de tôles en aluminium ou acier inox à brillance élevée

(30) Priorität: 31.07.2002 DE 10235021
(43) Veröffentlichungstag der Anmeldung: 11.02.2004
(73) Patentinhaber: Nordenia Deutschland Gronau GmbH, 48599 Gronau (DE)
(72) Erfinder: Hamulski, Markus, 48599 Gronau-Epe (DE); Hagemann, Andreas, 48249 Dülmen (DE)
(74) Vertreter: Albrecht, Rainer Harald

(56) Entgegenhaltungen:
- EP-A- 0 661 364
- EP-A- 0 763 584
- WO-A-03/018701
- DE-A- 19 923 780
- PATENT ABSTRACTS OF JAPAN vol. 016, no. 437 (C-0984), 11. September 1992 (1992-09-11) & JP 04 153287 A (NITTO DENKO CORP), 26. Mai 1992 (1992-05-26)

## Beschreibung

Die Erfindung betrifft eine selbstklebende Oberflächenschutzfolie, insbesondere zur Abdeckung von lackierten Blechen und Hochglanzblechen aus Aluminium oder Edelstahl, mit einem zumindest aus einer Trägerschicht und einer Klebstoffschicht bestehenden Schichtenverbund, wobei der Schichtenverbund durch Coextrusion hergestellt ist.

Als Oberflächenschutzfolie sind einfache Polyolefinfolien bekannt, die mit einem Acrylatkleber oder mit Naturkautschuk bzw. Latex beschichtet sind. Der Acrylatkleber weist eine Reihe von Nachteilen auf. Er hinterlässt auf glatten Oberflächen teilweise sichtbare Rückstände, ist ohne besondere Maßnahmen relativ feuchtigkeitsempfindlich und besitzt eine Haftkraft, die abhängig ist von der Oberflächenchemie der Kontaktfläche sowie bei höheren Temperaturen anzieht. Naturkautschuk zeigt aufgrund seiner Qualitätsschwankungen häufig große Unterschiede in seiner Haftkraft und ist ohne entsprechende Stabilisierung sehr unbeständig gegen Alterung. Acrylatkleber und Naturkautschuk werden als Dispersion oder Emulsion verarbeitet. Zur Herstellung einer Oberflächenschutzfolie sind daher zwei Arbeitsgänge, nämlich eine Folienextrusion und eine nachträgliche Klebstoffbeschichtung, erforderlich. Das zweistufige Verfahren ist aufwendig.

Aus der DE 199 23 780 sind coextrudierte Klebstofffolien mit einer Klebstoffschicht bekannt. Diese Folien eignen sich nur zur Verwendung als Oberflächenschutzfolie auf Automobillacken, da die Haftkraft auf anderen Oberflächen stark von den physikalischen und chemischen Eigenschaften der jeweiligen Kontaktfläche abhängig ist und bei zunehmender Temperatur stark anzieht. Beim Lösen einer solchen Folie von glänzenden Aluminium- und Edelstahlflächen bleiben störende Rückstände in Form milchiger Schleier. Bei lackierten Blechen auf Basis Polyurethanlack und auf Kunststoffflächen tritt nach einer Wärmebelastung häufig eine Permanentverklebung ein. Schließlich ist auch die Haftvermittlung zwischen der Klebstoffschicht und dem Träger der Klebstofffolie problematisch. Bei höheren Temperaturen beobachtet man hin und wieder eine Schichtentrennung.

Aus der EP 0 661 364 A2 ist eine coextrudierte Schutzfolie bekannt, die zumindest eine Kernstoffschicht und eine Trägerschicht aufweisen. Die Klebstoffschicht besteht hauptsächlich aus einem aufwendig hergestellten Polyolefin-Copolymer, dessen Polyolefin-Bausteine bis zu 12 Kohlenstoffatome aufweisen. Die klebrigen Eigenschaften der Klebstoffschicht werden durch die Bereitstellung dieser langkettigen Copolymere erreicht. Die Herstellung der Schutzfolie ist aufwendig und kostenintensiv.

Aus der WO 03/018701 A1 ist eine Oberflächenschutzfolie für lackierte Flächen bekannt, deren Klebstoffschicht einerseits aus einem Styrol-Block-Copolymer und andererseits aus einem Klebeharz besteht, wobei mindestens die Hälfte der Kleberharze Flüssigklebharze mit einer Erweichungstemperatur von unter 25° C sind.

Schutzfolien mit einer Trägerschicht aus Polyolefinen und einer Klebstoffschicht sind auch aus der EP 0 763 584 A1 und der JP 4153287 A bekannt. Die Klebstoffschicht besteht jeweils hauptsächlich aus einem Polymer der Gruppe Polyisobutylen, Butyl-Kautschuk und Polybutylen. Die Klebstoffschicht wird in einem zusätzlichen Verfahrensschritt auf die Trägerschicht aufgebracht. Die Herstellung ist deshalb aufwendig.

Der Erfindung liegt die Aufgabe zugrunde, eine selbstklebende Oberflächenschutzfolie anzugeben, die durch Coextrusion kostengünstig und auf einfache Weise herstellbar ist und zum temporären Schutz von lackierten Blechen sowie Hochglanzblechen aus Aluminium oder Edelstahl geeignet ist.

Ausgehend von einer selbstklebenden Oberflächenschutzfolie mit den eingangs beschriebenen Merkmalen wird die Aufgabe erfindungsgemäß dadurch gelöst, dass die Klebstoffschicht aus einer Mischung aus Styrol-Block-Copolymer einerseits und einem Polyolefin aus der Gruppe Polyethylen (PE) und Polypropylen (PP) oder einer Polyolefinmischung aus Polyethylen und Polypropylen andererseits besteht. Als Styrol-Block-Copolymer eignen sich Styrol-Isopren-Styrol (SIS), Styrol-Ethlyen-Butylen-Styrol (SEBS), Styrol-Ethylen-Propylen-Styrol (SEPS), Styrol-Butadien-Styrol (SBS) Copolymere oder Mischungen der genannten Copolymere. Das Styrol-Block-Copolymer wird mit Polyolefinen, insbesondere Polyethylen und Polypropylen abgemischt.

Die erfindungsgemäße Oberflächenschutzfolie wird durch Coextrusion in einem Verfahrensschritt hergestellt. Die Erfindung beruht auf der Erkenntnis, dass Styrol-Block-Copolymere ohne Weichmachung durch Öle oder Harze als drucksensible Klebstoffschichten einsetzbar sind und durch Coextrusion verarbeitet werden können. Bei Verwendung von SIS oder SBS-Copolymeren sollte dieses einen Diblock-Gehalt (SI) von weniger als 15 Gew.-% aufweisen. Für Anwendungen der erfindungsgemäßen Oberflächenschutzfolie auf Hochglanzblechen aus Aluminium oder Edelstahl sollte der Diblockanteil weniger als 1 Gew.-% betragen.

Vorzugsweise ist die Klebstoffschicht so eingestellt, dass die Schälfestigkeit nach einer 24-stündigen Lagerung bei Raumtemperatur zwischen 0,15 N/cm und 3,5 N/cm (gemessen nach AFERA 4001) liegt. Gemäß einer bevorzugten Ausführung der Erfindung besteht die Klebstoffschicht aus einer Mischung aus einem SIS-Block-Copoylmer und Polyethylen. Durch die Abmischung mit Polyethylen, das in Mengen bis zu 60 Gew.-% zugegeben werden kann, ist die Haftkraft der Klebstoffschicht variabel einstellbar. Die Klebekräfte auf Kunststoffen (PC, PMMA) sowie auf lackierten Blechen (PET-, PU-, PVOF-, PE-Lack) liegen jeweils im selben Haftkraftniveau.

Als Trägerschicht können Polyolefine eingesetzt werden. Eine Haftvermittlerschicht zwischen der Trägerschicht und der Klebstoffschicht soll nicht ausgeschlossen sein. Im Rahmen der Erfindung liegt es ferner, dass die Trägerschicht einen UV-Stabilisator enthält.

Die Trägerschicht weist zweckmäßig eine Dicke von 20 bis 80 µm auf. Die coextrudierte Klebstoffschicht besitzt vorzugsweise eine Dicke zwischen 4 und 20 µm.

In weiterer Ausgestaltung lehrt die Erfindung, dass der durch Coextrusion hergestellte Schichtenverbund eine zusätzliche Releaseschicht auf der von der Klebstoffschicht abgewandten Seite der Trägerschicht aufweist. Die Releaseschicht bewirkt eine Trennung zwischen den Folienlagen, wenn die Oberflächenschutzfolie auf eine Rolle aufgewickelt wird. Sie kann Talkum, Kreide, Kieselsäure, Polyamidwachs oder Mischungen dieser Substanzen enthalten. Vorteilhaft ist auch eine Releaseschicht mit einer von einer Prägewalze erzeugten mikrogeprägten Oberfläche.

Die erfindungsgemäße Oberflächenschutzfolie zeichnet sich durch eine gute Haftung auf Oberflächen wie Glas, Keramik, Stahl, Polycarbonat, Acrylglas und dergleichen aus. Eine besonders bevorzugte Anwendung stellt die Verwendung der Folie als Oberflächenschutzfolie für lackierte Bleche und für Hochglanzbleche aus Aluminium oder Edelstahl dar, die beispielsweise als Metallcoils, Blechtafeln, Halb- oder Fertigerzeugnisse vorliegen können. Die erfindungsgemäße Oberflächenschutzfolie lässt sich leicht, weich und rückstandsfrei von den Oberflächen abziehen. Durch Coextrusion ist sie in einem Verfahrensschritt einfach und kostengünstig herstellbar.

### Beispiel:

Die folgende Folienrezeptur dient lediglich der Veranschaulichung des Aufbaus und der Klebstoffformulierung einer erfindungsgemäßen Oberflächenschutzfolie mit einem durch Coextrusion hergestellten Schichtenverbund.
Releaseschicht: 7 µm
   50% PE-LD (18 R 430)
   30 % Antiblock (M 65)
   20 % Talkum Batch (WG 365 C)
Trägerschicht: 38 µm
   60 % PE-LMD (LL 2920 AA)
   40 % PE-HD (0863 F Stamylan^{®})
Haftvermittlerschicht: 7 µm
   100 % EVA (ML 60)
Kleberschicht: 8 µm
   60 % SIS (Vector^{®} 4111)
   40 % PE-LD (18 R 430).

## Patentansprüche

1. Selbstklebende Oberflächenschutzfolie, insbesondere zur Abdeckung von lackierten Blechen und Hochglanzblechen aus Aluminium oder Edelstahl, mit einem zumindest aus einer Trägerschicht und einer Klebstoffschicht bestehenden Schichtenverbund, wobei der Schichtenverbund durch Coextrusion hergestellt ist, **dadurch gekennzeichnet, dass** die Klebstoffschicht aus einer Mischung aus Styrol-Block-Copolymer einerseits und einem Polyolefin aus der Gruppe Polyethylen (PE) und Polypropylen (PP) oder einer Polyolefinmischung aus Polyethylen und Polypropylen andererseits besteht.

2. Oberflächenschutzfolie nach Anspruch 1, **dadurch gekennzeichnet, dass** das Styrol-Block-Copolymer ein Styrol-Isopren-Styrol (SIS), Styrol-Ethylen-Butylen-Styrol (SEBS), Styrol-Ethylen-Propylen-Styrol (SEPS), Styrol-Butadien-Styrol (SBS) Copolymer oder eine Mischung der genannten Copolymere ist.

3. Oberflächenschutzfolie nach Anspruch 2, **dadurch gekennzeichnet, dass** bei Verwendung von SIS oder SBS-Copolymeren dieses einen Gehalt von weniger als 15 Gew.-% an Diblock aufweist.

4. Oberflächenschutzfolie nach Anspruch 3, **dadurch gekennzeichnet, dass** der Diblockgehalt weniger als 1 Gew.-% beträgt.

5. Oberflächenschutzfolie nach einem der Ansprüche 1 bis 4, **dadurch gekennzeichnet, dass** die Schälfestigkeit so eingestellt ist, dass die Klebkraft nach einer 24-stündigen Lagerung bei Raumtemperatur zwischen 0,15 N/cm und 3,5 N/cm liegt.

6. Oberflächenschutzfolie nach einem der Ansprüche 2 bis 5, **dadurch gekennzeichnet, dass** die Klebstoffschicht aus einer Mischung von Styrol-Isopren-Styrol (SIS) und Polyethylen (PE) besteht, wobei der Anteil von Polyethylen in der Klebstoffschicht bis zu 60 Gew.-% beträgt.

7. Oberflächenschutzfolie nach einem der Ansprüche 1 bis 6, **dadurch gekennzeichnet, dass** die coextrudierte Klebstoffschicht keine Zusätze von Ölen oder Harzen zur Weichmachung enthält.

8. Oberflächenschutzfolie nach einem der Ansprüche 1 bis 7, **dadurch gekennzeichnet, dass** die Trägerschicht aus einem Polyolefin besteht.

9. Oberflächenschutzfolie nach einem der Ansprüche 1 bis 8, **dadurch gekennzeichnet, dass** zwischen der Trägerschicht und der Klebstoffschicht eine Haftvermittlerschicht angeordnet ist.

10. Oberflächenschutzfolie nach einem der Ansprüche 1 bis 9, **dadurch gekennzeichnet, dass** die Trägerschicht eine Dicke von 20 bis 80 µm und die Klebstoffschicht eine Dicke zwischen 4 und 20 µm aufweist.

11. Oberflächenschutzfolie nach einem der Ansprüche 1 bis 10, **dadurch gekennzeichnet, dass** der durch Coextrusion hergestellte Schichtenverbund eine zusätzliche Releaseschicht auf der von der Klebstoffschicht abgewandten Seite der Trägerschicht aufweist.

12. Oberflächenschutzfolie nach Anspruch 11, **dadurch gekennzeichnet, dass** die Releaseschicht Talkum, Kreide, Kieselsäure, Polyamidwachs oder Mischungen dieser Substanzen enthält.

13. Oberflächenschutzfolie nach einem der Ansprüche 1 bis 12, **dadurch gekennzeichnet, dass** die Releaseschicht eine von einer Prägewalze erzeugte microgeprägte Oberfläche aufweist.

## Claims

1. Self-adhesive surface protection film, in particular for covering painted sheets and high-gloss sheets made from aluminium or stainless steel, comprising a layer composite which consists at least of a carrier layer and an adhesive layer, wherein the layer composite is produced by coextrusion, **characterised in that** the adhesive layer consists of a mixture of styrene block copolymer on the one hand and on the other hand a polyolefin selected from the group consisting of polyethylene (PE) and polypropylene (PP) or a polyolefin mixture of polyethylene and polypropylene.

2. Surface protection film according to claim 1, **characterised in that** the styrene block copolymer is a styrenelisoprene/styrene (SIS), styrene/ethylene/butylenel-styrene (SEBS), styrene/ethylene/propylene/styrene (SEPS) or styrene/butadiene/styrene (SBS) copolymer or a mixture of the aforementioned copolymers.

3. Surface protection film according to claim 2, **characterised in that**, when using SIS or SBS copolymers, said copolymer has a diblock content of less than 15% by weight.

4. Surface protection film according to claim 3, **characterised in that** the diblock content is less than 1% by weight.

5. Surface protection film according to one of claims 1 to 4, **characterised in that** the peel strength is set such that the adhesive force after storage for 24 hours at room temperature is between 0.15 N/cm and 3.5 N/cm.

6. Surface protection film according to one of claims 2 to 5, **characterised in that** the adhesive layer consists of a mixture of styrene/isoprene/styrene (SIS) and polyethylene (PE), wherein the proportion of polyethylene in the adhesive layer is up to 60% by weight.

7. Surface protection film according to one of claims 1 to 6, **characterised in that** the coextruded adhesive layer contains no additions of oils or resins for softening purposes.

8. Surface protection film according to one of claims 1 to 7, **characterised in that** the carrier layer consists of a polyolefin.

9. Surface protection film according to one of claims 1 to 8, **characterised in that** an adhesion promoter layer is arranged between the carrier layer and the adhesive layer.

10. Surface protection film according to one of claims 1 to 9, **characterised in that** the carrier layer has a thickness of 20 to 80 µm and the adhesive layer has a thickness between 4 and 20 µm.

11. Surface protection film according to one of claims 1 to 10, **characterised in that** the layer composite produced by coextrusion has an additional release layer on the side of the carrier layer remote from the adhesive layer.

12. Surface protection film according to claim 11, **characterised in that** the release layer contains talcum, chalk, silicic acid, polyamide wax or mixtures of these substances.

13. Surface protection film according to one of claims 1 to 12, **characterised in that** the release layer has a micro-embossed surface produced by an embossing roller

## Revendications

1. Film protecteur de surface auto-adhérant, en particulier pour le revêtement de tôles peintes et de tôles en aluminium ou en inox à brillance élevée, avec un assemblage de couches constitué d'au moins une couche porteuse et d'une couche de colle, l'assemblage de couches étant fabriqué par coextrusion, **caractérisé en ce que** la couche de colle est constituée d'un mélange de copolymère en bloc de styrène d'une part et d'une polyoléfine provenant du groupe polyéthylène (PE) et polypropylène (PP) ou d'un mélange de polyoléfine à base de polyéthylène et de polypropylène d'autre part.

2. Film protecteur de surface selon la revendication 1, **caractérisé en ce que** le copolymère en bloc de styrène est un copolymère styrène-isoprène-styrène (SIS), un copolymère styrène-éthylène-butylène-styrène (SEBS), un copolymère styrène-éthylène-propylène-styrène (SEPS), un copolymère styrène-butadiène-styrène (SBS) ou un mélange des copolymères cités.

3. Film protecteur de surface selon la revendication 2, **caractérisé en ce que**, si l'on utilise des copolymères SIS ou SBS, celui-ci présente une teneur de moins de 15 % en poids de dibloc.

4. Film protecteur de surface selon la revendication 3, **caractérisé en ce que** la teneur en dibloc est inférieure à 1 % en poids.

5. Film protecteur de surface selon l'une quelconque des revendications 1 à 4, **caractérisé en ce que** la résistance à l'écroûtage est réglée de telle sorte que la force adhésive après un stockage de 24 heures à la température ambiante se situe entre 0,15 N/cm et 3,5 N/cm.

6. Film protecteur de surface selon l'une quelconque des revendications 2 à 5, **caractérisé en ce que** la couche de colle est constituée d'un mélange styrène-isoprène-styrène (SIS) et de polyéthylène (PE), la fraction de polyéthylène dans la couche de colle allant jusqu'à 60 % en poids.

7. Film protecteur de surface selon l'une quelconque des revendications 1 à 6, **caractérisé en ce que** la couche de colle coextrudée ne contient pas d'additifs d'huiles ou de résines pour la plastification.

8. Film protecteur de surface selon l'une quelconque des revendications 1 à 7, **caractérisé en ce que** la couche support est à base d'une polyoléfine.

9. Film protecteur de surface selon l'une quelconque des revendications 1 à 8, **caractérisé en ce qu'**une couche d'agent adhésif est disposée entre la couche support et la couche de colle.

10. Film protecteur de surface selon l'une quelconque des revendications 1 à 9, **caractérisé en ce que** la couche support présente une épaisseur de 20 à 80 µm et la couche de colle une épaisseur comprise entre 4 et 20 µm.

11. Film protecteur de surface selon l'une quelconque des revendications 1 à 10, **caractérisé en ce que** l'assemblage de couches fabriqué par coextrusion présente une couche antiadhésive supplémentaire sur le côté, opposé à la couche de colle, de la couche support.

12. Film protecteur de surface selon la revendication 11, **caractérisé en ce que** la couche antiadhésive contient du talc, de la craie, de l'acide silique, de la cire de polyamide ou des mélanges de ces substances.

13. Film protecteur de surface selon l'une quelconque des revendications 1 à 12, **caractérisé en ce que** la couche antiadhésive présente une surface microgaufrée générée par un rouleau de gaufrage.
